# EUROPEAN PATENT APPLICATION

(11) **EP 4 450 272 A1**
(43) Date of publication of application: **23.10.2024**
(21) Application number: 23168778.1
(22) Date of filing: 19.04.2023
(51) Int. Cl.: B31B 70/00, B29C 65/40, B31B 70/10, B31B 70/64, B31B 70/81, B31B 160/10, B65D 33/00, B65D 33/14, B65D 33/25, B31B 70/04, B31B 70/26, B31B 150/20, B65B 43/12

(54) **A BAG-LIKE PACKAGE BLANK AND A METHOD FOR MANUFACTURING A CONTINUOUS BAG-LIKE PACKAGE BLANK**

(71) Applicant: Pronova Aktiebolag, 302 41 Halmstad (SE)
(72) Inventor: JOSTLER, Johan, 302 74 Halmstad (SE)
(74) Representative: AWA Sweden AB

(57) **Abstract**

The invention relates to a bag-like package blank (1) comprising a sheet of material (2) having at least four outer edges (3, 4, 5, 6) which is folded to be shaped into the bag-like package blank (1), a first carrier strip (7) arranged along a first outer edge (3) of the folded sheet of material (2), and a second carrier strip (8) arranged along a second outer edge (4) of the folded sheet of material (2). The invention also relates to a method for manufacturing a continuous bag-like package blank (1).

## Description

### Technical field

The invention is related to a bag-like package blank and a method for manufacturing a continuous bag-like package blank.

### Background art

The invention is related to a bag-like package blank and a method for manufacturing a continuous bag-like package blank. These package blanks are formed to be transported along a web for the filling of the bag-like package blanks joined together one after the other. After filling, the package blanks are sealed and separated into individual sealed bags.

SE 501544 discloses a method and a device for forming and filling packages that are formed of package blanks manufactured by folding a flexible strip of plastic material into the package blank that consists of bag-like parts joined together one after the other. Said parts are furthermore arranged to be carried and transported along a web by support arms provided with channels and channel gaps in which the package blank slides. The bag-like parts slide along the support arms for opening, filling, sealing and separation into individual packages filled with contents. The package blank is formed with upper edge parts provided with thickenings, which are intended to slide in each one of the channels in the support arms, which are situated parallel in relation to each other. At a filling area, the support arms curve off from each other and form a greater spacing between them, the joined together bag-like parts being opened and filling can take place. After the bag-like parts having passed said filling area, the distance decreases between the support arms again, an aftertreatment in the form of sealing, separation and detachment from the support arms commencing.

SE 525741 discloses a method and a device for producing a continuous edge thickening along the running direction of a stretched and tensioned web of a positively and continuously transported thermoplastic film. The thickening according to this patent specification is provided by edge parts of the plastic film being folded and welded into a final state for the use of the plastic film as packages, e.g., in a packing machine according to prior art, e.g. WO 02/083506.

These disclosed methods and devices for providing edge thickenings on a package blank make great demands on the material and its thickness as well as the manufacturing equipment and not the least on the skill of the operator. These demands represent disadvantages each of which is difficult to solve separately, and which imply furthermore an expensive manufacture of the package blanks. Thus, there is a comprehensive need for improvements in this technical field.

### Summary of the invention

It is an objective of the present invention to mitigate, alleviate or eliminate one or more of the above-identified deficiencies in the art and disadvantages singly or in any combination and solve at least the above-mentioned problems.

According to a first aspect of the invention, these and other objects are achieved, in full or at least in part, by a bag-like package blank. The bag-like package blank comprises a sheet of material having at least four outer edges which is folded to be shaped into the bag-like package blank, a first carrier strip arranged along a first outer edge of the folded sheet of material, and a second carrier strip arranged along a second outer edge of the folded sheet of material, the first outer edge being aligned with and opposite to the second outer edge of the folded sheet of material. The remaining outer edges of the folded sheet of material are sealed together. The bag-like package blank is characterised in that each one of the first and second carrier strip has the form of a plastic film equipped with a thickened portion applied as a plastic strand at a top section thereof.

This is advantageous in that an improved bag-like package blank is provided which is easier to manufacture at a lower cost. Further, the invention can provide on one hand solid and on the other hand stiffer edge thickenings, via the carrier strips, which means that the package blanks will be able to slide with lower friction in the packaging device and also that the edge thickenings do not jam in the channel gaps of the packaging device.

The material may be an environmental friendly material such as paper or laminate.

The plastic film may be applied as an extruded warm plastic strand, wherein the thermal content is adapted to melt a part of or all of the plastic film material which is adapted to support the plastic strand.

The plastic film may have a thickness of less than 0.5 mm.

The plastic strand may have a thickness which is adapted to the thickness of the plastic film and has a cross-sectional area corresponding to a diameter of 0.5 to 3 mm.

The plastic strand may be arranged at an outer edge of the first and second carrier strip, respectively, and is adapted to cooperate with a carrier device, formed with a slit, in order to retain the bag-like package blank.

The bag-like package may further comprise a zip-lock at a bottom section thereof, opposite to a top section at which the first and second carrier strip are provided.

The zip-lock may be adapted to cooperate with a carrier device, formed with a slit, in order to retain the bag-like package blank.

The sheet of material may be quadrangular.

According to a second aspect of the invention, these and other objects are achieved, in full or at least in part, by a method for manufacturing a continuous bag-like package blank, which is produced by a plane sheet of material being unwound from a storage reel. The method comprises the steps of attaching a first carrier strip at a first outer edge of sheet of material by means of static electricity, attaching a second carrier strip at a second outer edge of sheet of material by means of static electricity, securing the first carrier strip to the first outer edge of sheet of material by means of heat treatment, securing the second carrier strip to the second outer edge of sheet of material by means of heat treatment, extruding a material bead onto the first carrier strip which is permanently attached to thereto to create a thickened portion applied as a plastic strand, extruding a material bead onto the second carrier strip which is permanently attached to thereto to create a thickened portion applied as a plastic strand, folding the plane sheet of material such that the first and second outer edge meet, opposite to each other, to shape the sheet of material into the continuous bag-like package blank, and sealing remaining outer edges of the continuous bag-like package blank.

It should be further noted that the different steps in the method can be performed in another order than what is presented above. For example, it is possible to conduct the step of extruding the material bead onto the first carrier strip and/or the second carrier strip before the steps of attaching the first carrier strip at the first outer edge of sheet of material by means of static electricity and attaching the second carrier strip at the second outer edge of sheet of material by means of static electricity, as well as before the steps of securing the first carrier strip to the first outer edge of sheet of material by means of heat treatment and securing the second carrier strip to the second outer edge of sheet of material by means of heat treatment.

All of the steps can be carried out in one single manufacturing device which in turn will lead to a more space and cost-efficient production.

The material may be an environmental friendly material such as paper or laminate.

The heat treatment may be welding.

According to a third aspect of the invention, these and other objects are achieved, in full or at least in part, by a use of a device for manufacturing a continuous bag-like package blank. The bag-like package blank comprises a sheet of material having at least four outer edges which is folded to be shaped into the bag-like package blank, a first carrier strip arranged along a first outer edge of the folded sheet of material, and a second carrier strip arranged along a second outer edge of the folded sheet of material, the first outer edge being aligned with and opposite to the second outer edge of the folded sheet of material. The remaining outer edges of the folded sheet of material are sealed together. The bag-like package blank is characterised in that each one of the first and second carrier strip has the form of a plastic film equipped with a thickened portion applied as a plastic strand at a top section thereof.

The continuous bag-like package blank may be manufactured in the device by means of the method according to the features described above.

Effects and features of the second and third aspect of the present invention are largely analogous to those described above in connection with the first aspect of the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

As used herein, the term "comprising", and variations of that term are not intended to exclude other additives, components, integers, or steps.

As used herein, by the term "vertically" and "vertical direction", as well as variations of these terms, it is meant a vertical or substantially vertical direction in relation to the ground on which the electric vehicle charger or the fuel dispensing unit is placed.

As used herein, by the term "horizontally" and "horizontal direction", as well as variations of these terms, it is meant a vertical or substantially vertical direction in relation to the ground on which the electric vehicle charger or the fuel dispensing unit is placed.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1A and 1B are perspective views of an exemplary embodiment of a bag-like package blank according to a first aspect of the invention.
Fig. 1C is a perspective view of a continuous web of the bag-like package blanks illustrated in Fig. 1A and 1B.
Fig. 2A and 2B are perspective views of another exemplary embodiment of the bag-like package blank according to the first aspect of the invention.
Fig. 3 is a perspective view of an exemplary embodiment of a portion of a device used for manufacturing a continuous bag-like package blank according to a third aspect of the invention.

### Detailed description of preferred embodiments of the invention

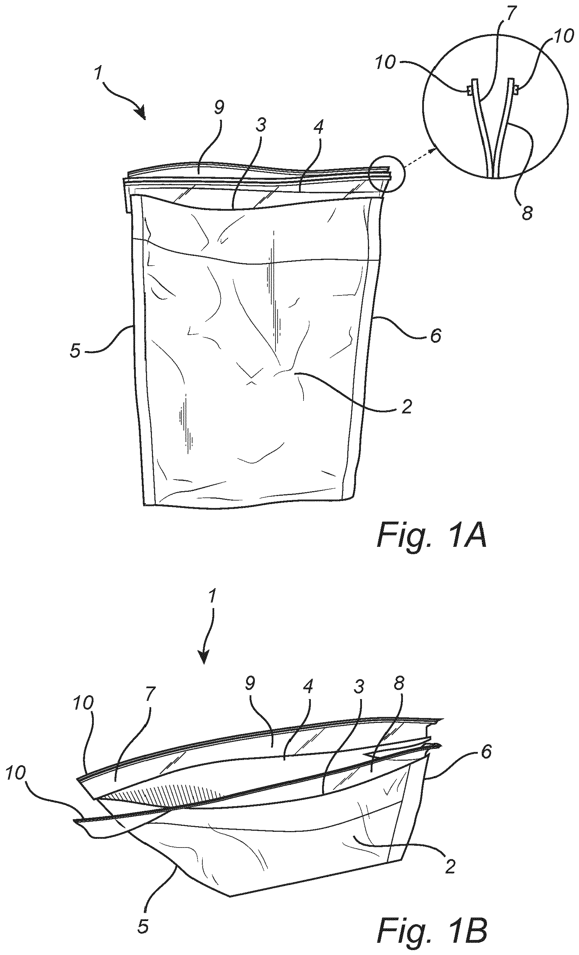

Fig. 1A and 1B illustrate an exemplary embodiment of a bag-like package blank 1. The bag-like package blank 1 is formed to be transported along a web for the filling of the bag-like package blanks 1 joined together one after the other. After filling, the package blanks 1 are sealed and separated into individual sealed bags.

The bag-like package blank 1 comprises a quadrangular sheet of material 2 with four outer edges 3, 4, 5, 6 which is folded at the middle to be shaped into the bag-like package blank 1.

The bag-like package blank 1 comprises a first carrier strip 7 which is arranged along a first outer edge 3 of the folded sheet of material 2, and a second carrier strip 8 which is arranged along a second outer edge 4 of the folded sheet of material 2. The bag-like package blank 1 is folded in a manner such that the first outer edge 3 is aligned with and opposite to the second outer edge 4 of the folded sheet of material 2. The remaining outer edges 5, 6 of the folded sheet of material 2 are sealed together to create a complete bag-like package blank 1.

The first and second carrier strip 7, 8 have the shape of a plastic film 9 equipped with a thickened portion 10 applied as a plastic strand at a top section thereof. The plastic film 9 is applied as an extruded warm plastic strand 10, wherein the thermal content is adapted to melt a part of or all of the plastic film material which is adapted to support the plastic strand 10.

Preferably, the plastic film 9 has a thickness of less than 0.5 mm. However, naturally, other thicknesses are also possible. As an example, the plastic strand 10 can have a thickness which is adapted to the thickness of the plastic film 9 and has a cross-sectional area corresponding to a diameter of 0.5 to 3 mm.

The plastic strand 10 is arranged at an outer edge of the first and second carrier strip 7, 8, respectively, and is adapted to cooperate with a carrier device (not shown), formed with a slit, in order to retain the bag-like package blank 1.

In this specific embodiment, the sheet of material 2 of the bag-like package blank 1 is an environmental friendly material such as paper or laminate, which is an highly advantageous feature in relation to the bag-like package blanks according to the presently known prior art.

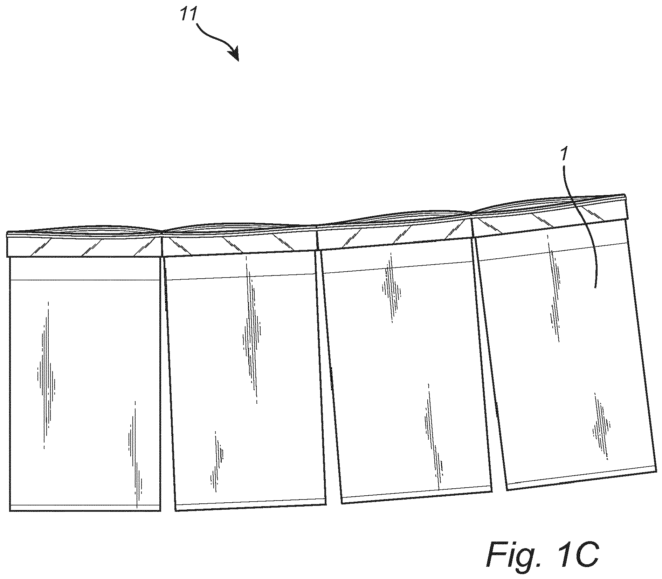

Fig. 1C illustrates a continuous web 11 of the bag-like package blanks 1. This is preferably how the bag-like package blanks 1 are manufactured in a device adapted for that purpose.

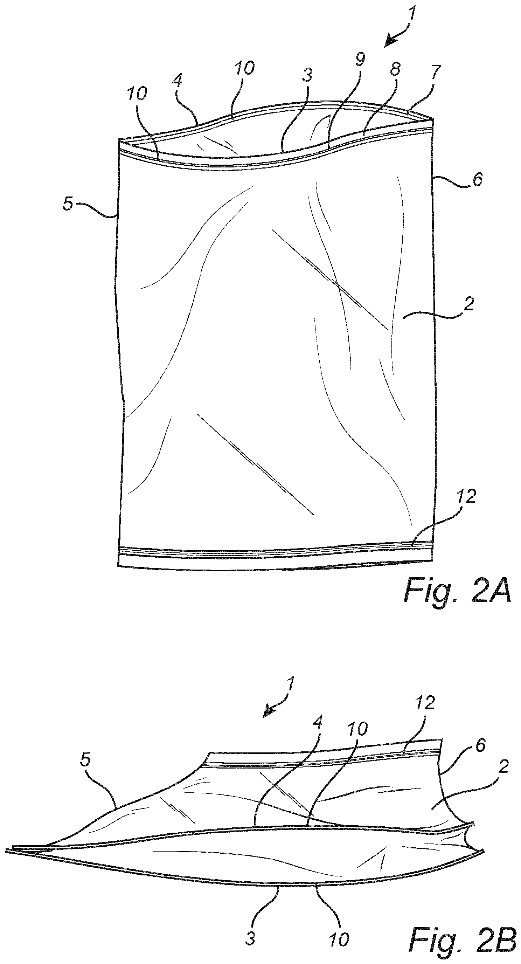

In Fig. 2A and 2B, another exemplary embodiment of a bag-like package blank 1 is illustrated. This embodiment is very similar to the one illustrated in Fig. 1A and 1B but the sheet of material 2 is constituted by plastic.

The bag-like package blank 1 further comprises a zip-lock 12 at a bottom section thereof, opposite to a top section at which the first and second carrier strip 7, 8 are provided. Potentially, the zip-lock 12 could be adapted to cooperate with a carrier device, formed with a slit, in order to retain the bag-like package blank - as an alternative to the first and second carrier strip 7, 8.

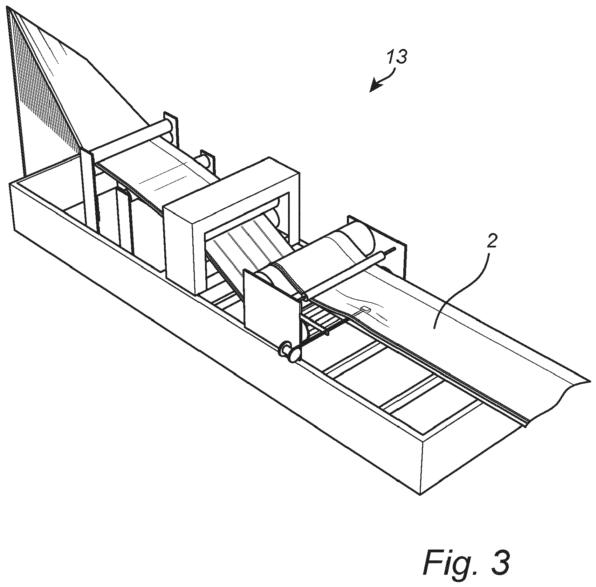

Fig. 3 illustrates an exemplary embodiment of a portion of a device 12 used for manufacturing the continuous bag-like package blank 1.

The bag-like package blank 1 is preferably manufactured by the device 13 in which the following steps are performed.

Attaching a first carrier strip 7 at a first outer edge 3 of sheet of material 2 by means of static electricity and attaching a second carrier strip 8 at a second outer edge 4 of sheet of material 2 by means of static electricity.

Securing the first carrier strip 7 to the first outer edge 3 of sheet of material 2 by means of heat treatment and securing the second carrier strip 8 to the second outer edge 4 of sheet of material 2 by means of heat treatment.

Extruding a material bead onto the first carrier strip 7 which is permanently attached to thereto to create a thickened portion 10 applied as a plastic strand and extruding a material bead onto the second carrier strip 8 which is permanently attached to thereto to create a thickened portion 10 applied as a plastic strand.

Folding the plane sheet of material 2 such that the first and second outer edge 3, 4 meet, opposite to each other, to shape the sheet of material 2 into the continuous bag-like package blank 1, and finally sealing remaining outer edges 5, 6 of the continuous bag-like package blank 1.

Naturally, the steps stated above could be performed in any suitable order and thus the method is not limited to the specific example presented above.

It is understood that other variations in the present invention are contemplated and, in some instances, some features of the invention can be employed without a corresponding use of other features. Accordingly, it is appropriate that the appended claims be construed broadly in a manner consistent with the scope of the invention.

For instance, the size shape and number of the different components included in bag-like package blank 1 and in the device 13 used for manufacturing the continuous bag-like package blank 1 may be varied in any suitable manner as long as the objectives of the inventions is maintained.

## Claims

1. A bag-like package blank (1), comprising
a sheet of material (2) having at least four outer edges (3, 4, 5, 6) which is folded to be shaped into the bag-like package blank (1),
a first carrier strip (7) arranged along a first outer edge (3) of the folded sheet of material (2), and
a second carrier strip (8) arranged along a second outer edge (4) of the folded sheet of material (2), the first outer edge (3) being aligned with and opposite to the second outer edge (4) of the folded sheet of material (2),
wherein remaining outer edges (5, 6) of the folded sheet of material (2) are sealed together,
**characterised in that** each one of the first and second carrier strip (7, 8) has the form of a plastic film (9) equipped with a thickened portion (10) applied as a plastic strand at a top section thereof.

2. The bag-like package blank (1) according to claim 1, wherein the material (2) is an environmental friendly material such as paper or laminate.

3. The bag-like package blank (1) according to claim 1 or 2, wherein the plastic film (9) is applied as an extruded warm plastic strand (10), wherein the thermal content is adapted to melt a part of or all of the plastic film (9) material which is adapted to support the plastic strand (10).

4. The bag-like package blank (1) according to any one of the preceding claims, wherein the plastic film (9) has a thickness of less than 0.5 mm.

5. The bag-like package blank (1)according to any one of the preceding claims, wherein the plastic strand (10) has a thickness which is adapted to the thickness of the plastic film (9) and has a cross-sectional area corresponding to a diameter of 0.5 to 3 mm.

6. The bag-like package blank (1) according to any one of the preceding claims, wherein the plastic strand (10) is arranged at an outer edge of the first and second carrier strip (7, 8), respectively, and is adapted to cooperate with a carrier device, formed with a slit, in order to retain the bag-like package blank (1).

7. The bag-like package blank (1) according to any one of the preceding claims, wherein the further comprises a zip-lock (12) at a bottom section thereof, opposite to a top section at which the first and second carrier strip (7, 8) are provided.

8. The bag-like package blank (1) according to claim 7, wherein the zip-lock is adapted to cooperate with a carrier device, formed with a slit, in order to retain the bag-like package blank (1).

9. The bag-like package blank (1) according to any one of the preceding claims, wherein the sheet of material (2) is quadrangular.

10. A method for manufacturing a continuous bag-like package blank (1), which is produced by a plane sheet of material (2) being unwound from a storage reel, comprising the steps of:
attaching a first carrier strip (7) at a first outer edge (3) of sheet of material (2) by means of static electricity,
attaching a second carrier strip (8) at a second outer edge (4) of sheet of material (2) by means of static electricity,
securing the first carrier strip (7) to the first outer edge (3) of sheet of material (2) by means of heat treatment,
securing the second carrier strip (8) to the second outer edge (4) of sheet of material (2) by means of heat treatment,
extruding a material bead onto the first carrier strip (7) which is permanently attached to thereto to create a thickened portion (10) applied as a plastic strand,
extruding a material bead onto the second carrier strip (8) which is permanently attached to thereto to create a thickened portion (10) applied as a plastic strand,
folding the plane sheet of material (2) such that the first and second outer edge (3, 4) meet, opposite to each other, to shape the sheet of material (2) into the continuous bag-like package blank (1), and
sealing remaining outer edges (5, 6) of the continuous bag-like package blank (1).

11. The method according to claim 10, wherein the material (2) is an environmental friendly material such as paper or laminate.

12. The method according to any one of the claims 10 or 11, wherein the heat treatment is welding.

13. Use of a device (13) for manufacturing a continuous bag-like package blank (1), the bag-like package blank (1) comprising:
a sheet of material (2) having at least four outer edges (3, 4, 5, 6) which is folded to be shaped into the bag-like package blank (1),
a first carrier strip (7) arranged along a first outer edge (3) of the folded sheet of material (2), and
a second carrier strip (8) arranged along a second outer edge (4) of the folded sheet of material (2), the first outer edge (3) being aligned with and opposite to the second outer edge (4) of the folded sheet of material (2),
wherein remaining outer edges (5, 6) of the folded sheet of material (2) are sealed together,
**characterised in that** each one of the first and second carrier strip (7, 8) has the form of a plastic film (9) equipped with a thickened portion (10) applied as a plastic strand at a top section thereof.

14. Use according to claim 13, wherein the continuous bag-like package blank (1) is manufactured in the device (13) by means of a method according to any one of the claims 10 to 12.
